# EUROPEAN PATENT APPLICATION

(11) **EP 2 281 770 A2**
(43) Date of publication of application: **09.02.2011**
(21) Application number: 10170277.7
(22) Date of filing: 21.07.2010
(51) Int. Cl.: B66C 23/20, F03D 1/00

(54) **Tower climbing and servicing device**

(30) Priority: 04.08.2009 US 535288
(71) Applicant: General Electric Company, Schenectady, NY 12345 (US)
(72) Inventor: Liu, Yang, 201203, ZhangJiang Hi-Tech Park (CN)
(74) Representative: Bedford, Grant Richard

(57) **Abstract**

A servicing system (40) for a tower member (4) including a first end portion (6) that extends to a second end portion (8) through an intermediate portion (10) having an outer surface (11) includes a climbing system (54) operatively coupleable to the tower member (4). The climbing system (54) includes at least one climbing module (64-69) that is selectively operated to shift the climbing system (54) along the tower member (4) from the first end portion (6) toward the second end portion (8) The servicing system (40) also includes an operating system (58) operatively coupled to the climbing system (54). The operating system (58) includes at least one lifting motor (104) and a maintenance member (124). The at least one lifting motor (104) selectively shifts the operating system (58) relative to the climbing system (54).

## Description

The subject matter disclosed herein relates to the art of tower servicing devices and, more particularly, to tower climbing and servicing device.

The need to scale towers and service supported components has existed for some time. For example, wind generators must be serviced in order to maintain proper operation. In wind generators, air currents rotate large rotor blades or propellers that are mounted in nacelles at the top of a tower. The blades spin a rotor relative to a stator to generate an electrical field. The rate of rotation is controlled by varying blade pitch as well as through the use of various braking systems. During high wind conditions, the blade pitch is adjusted to spill wind energy in order to limit rotational speed. Occasionally, the braking system is employed to further prevent the blades from achieving high rotational speeds. During low wind conditions, the blade pitch is adjusted in order to capture as much wind energy as possible.

Over time, the wind generators require maintenance. Dirt, dust and other debris carried by the wind adhere to the generator. As such, the generator, in particular the blades and the nacelle, requires periodic cleaning. At present, cleaning the wind generator requires skilled personnel to scale the tower. Climbing gear such as harnesses, boatswains' chairs, or scaffolding, is suspended from the nacelle or blade hub to provide support for the personnel as various maintenance tasks are performed.

According to one aspect of the invention, a servicing system for a tower member including a first end portion that extends to a second end portion through an intermediate portion having an outer surface includes a climbing system operatively coupleable to the tower member. The climbing system includes at least one climbing module that is selectively operated to shift the climbing system along the tower member from the first end portion toward the second end portion. The servicing system also includes an operating system operatively coupled to the climbing system. The operating system includes at least one lifting motor and a maintenance member.

The at least one lifting motor selectively shifts the operating system relative to the climbing system. The tower servicing system may include at least one climbing module that includes a body member having at least one driving wheel, and at least one driving motor operatively coupled to the at least one driving wheel. The at least one driving wheel may include a plurality of driving wheels and the at least one driving motor may include a first driving motor and a second driving motor. The first driving motor may be connected to select ones of the plurality of driving wheels, and the second driving motor may be connected to other select ones of the plurality of driving wheels. The at least one climbing module may include a plurality of climbing modules. In addition, it may include a connector member linking each of the plurality of climbing modules, the connector member being configured and disposed to urge each of the plurality of climbing modules onto the outer surface of the tower member. The connector member may be configured and disposed to circumscribe the tower member. Furthermore, the at least one the tower servicing system may include a first lifting motor operatively connected between one of the plurality of climbing modules and the operating system, and a second lifting motor operatively connected between another of the plurality of climbing modules and the operation system, the first and second lifting motors being selectively operated to shift the operating system toward the climbing system. The operating system may include at least one rail member extending about the outer surface of the tower member, the maintenance member being selectively shifted along the at least one rail member. The maintenance member may be selectively shifted along the at least one rail member in a direction substantially perpendicular to a direction of travel of the climbing system. The at least one rail member may circumscribe the tower member. The tower servicing system may additionally include an attachment system operatively coupled to the (at least one) climbing module, the attachment system being selectively activated to secure the climbing module to the outer surface of the tower member. The attachment system may include at least one clamp member and at least one actuator member, the actuator member being selectively activated to urge the clamp member into contact with the outer surface of the tower member.

According to another aspect of the invention, a method of servicing a tower member having a main body including a first end portion, a second end portion and an intermediate portion having an outer surface includes mounting a climbing system including at least one climbing module to the outer surface of the tower member. The method further includes connecting an operating system provided with a maintenance member to the climbing system, selectively shifting the climbing system from the first end portion toward the second end portion of the tower member, selectively shifting the operating system toward the climbing system, and operating the maintenance member to perform a maintenance operation on the tower member. The method of servicing a tower member may also include stopping the climbing system along the tower member, and clamping the climbing module to the outer surface of the tower member. Moreover, the method may include shifting the maintenance member along at least one rail that circumscribes the tower member. Shifting the maintenance member may include moving the maintenance member in a direction substantially perpendicular to a direction of travel of the climbing system.

According to yet another aspect of the invention, a servicing system includes a climbing system configured and disposed to be operatively coupled to a tower member. The climbing system includes at least one climbing module that is selectively operated to shift the climbing system axially along the tower member. The serving system also includes an operating system operatively coupled to the climbing system. The operating system including at least one lifting motor and a maintenance member, the at least one lifting motor selectively shifting the operating system relative to the climbing system, allowing the maintenance member to selectively perform maintenance on the tower member. The at least one climbing module may include a plurality of climbing modules spaced about the outer surface. The tower serving system may also have an operating system that includes at least one rail member extending about an outer surface of the tower member, the maintenance member being selectively shifted along the at least one rail member.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial perspective view of a tower climbing and service device mounted to a wind generator tower in accordance with an exemplary embodiment;
FIG 2 is an elevational view of the tower climbing and servicing device of FIG. 1;
FIG 3 is a top view of the tower climbing and servicing device of FIG. 2; and
FIG. 4 is a perspective view of a climbing module including an attachment system in accordance with an exemplary embodiment.

The detailed description explains embodiments of the invention, together with advantages and features, by way of example with reference to the drawings.

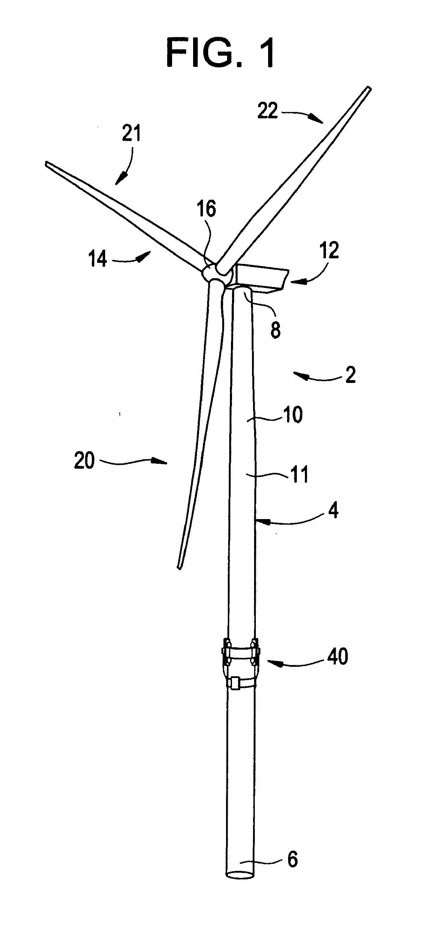

With initial reference to FIG. 1, a wind turbine is indicated generally at 2. Wind turbine 2 is configured to be supported upon land or out at sea. Towards that end, wind turbine 2 includes a tower member 4 having a first end portion 6 that extends to a second end portion 8 through an intermediate portion 10 having an outer surface 11. Wind turbine 2 further includes a yaw system 12 having mounted thereto a wind energy collection system 14. Yaw system 12 is selectively rotated about an axis defined by tower member 4 in order to position wind energy collection system 14 relative to prevailing wind currents. In any event, wind energy collection system 14 includes a central hub 16 and a plurality of blade members 20-22. Blade members 20-22 collectively rotate about an access defined by central hub 16 in the response to wind current. The rotation of blade members 20-22 is transferred to a rotor (not shown) that is rotated within a stator (also not shown) to produce electricity. In addition, each blade member 20 is selectively pivotable in order to establish a preferred pitch so as to enhance wind energy collection. Over time, maintenance to tower member 4 is required. Dirt carried by the air currents, animal contact such as, birds and the like should be periodically removed from wind turbine 2. Towards that end, wind turbine 2 is provided with a servicing system 40 that is selectively mounted to tower member 4.

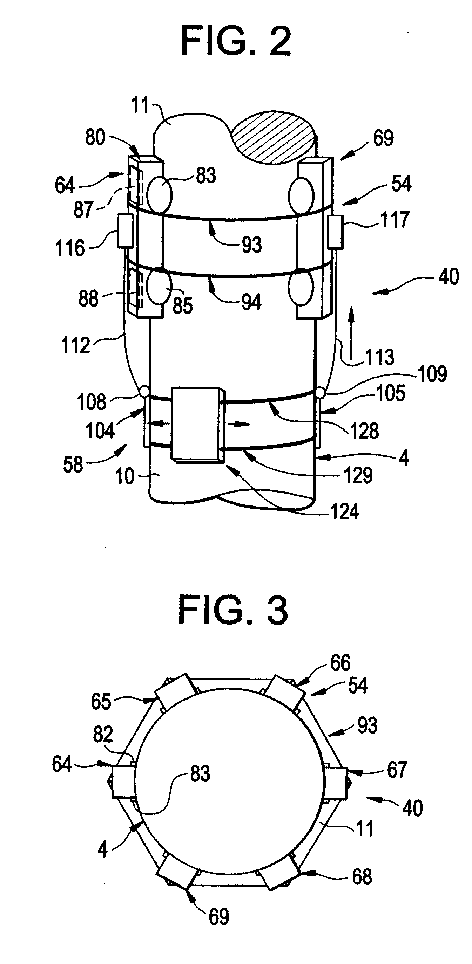

As best shown in FIGS. 2 and 3, servicing system 40 includes a climbing system 54 and an operating system 58. Climbing system 54 includes a plurality of climbing modules 64-69 that are arrayed about outer surface 11 of tower member 4. As each climbing module 64-69 is similarly constructed, a detailed description will follow referencing climbing module 64 with an understanding that the remaining climbing modules, i.e., climbing modules 65-69 are similarly formed. As shown, climbing module 64 includes a body member 80 having a first pair of drive wheels 82 and 83 and a second pair of drive wheels one of which is indicated at 85. First pair of drive wheels 82 and 83 are operatively connected to a first driving motor 87 arranged within the body member 80 while the second pair of drive wheels are operatively coupled to a second driving motor 88 also disposed within body member 80. In accordance with the exemplary embodiment, drive wheels 82-85 are formed from a material having a high coefficient of friction thereby enabling climbing modules 64 to scale tower member 4 from first end portion 6 towards second end portion 8. In order to further ensure frictional contact between climbing modules 64-69 and tower member 4, climbing system 54 includes a first connector member 93 and second connector member 94. Connector members 93 and 94 circumscribe tower member 4 and apply pressure to climbing modules 64-69. More specifically, connector members 93 and 94 are formed from an elastic-type material that urges climbing modules 64-69 onto outer surface 11 of tower member 4. Circumscribe should be understood to mean that connector members 93 and 94 extend about an outer circumference of tower member 4. Connector members 93 and 94 could be, but need not be, in contact with tower member 4.

As further shown in FIG. 2, operating system 58 includes a first lifting motor 104 and a second lifting motor 105. Each lifting motor 104, 105 includes a corresponding drum member 108 and 109. Drum member 108 stores a first length of cable 112 while second drum member 109 stores a second length of cable of 113. Cables 112 and 113 extend from respective ones of drum members 108 and 109 to corresponding mounting members 116 and 117 provided on, for example, climbing modules 64 and 69. Although shown with two lifting motors connected between operating system 58 and climbing system 57, it should be understood that number of lifting motors and cables could vary in accordance with the exemplary embodiment.

In further accordance with the exemplary embodiment, operating system 58 includes a maintenance member 124 that is supported upon first and second rail members 128 and 129. More specifically, rail members 128 and 129 circumscribe outer surface 11 of tower member 4 with maintenance member 124 being selectively shiftable about outer surface 11 of tower member 4. Circumscribe should be understood to mean that rail members 128 and 129 extend about an outer circumference of tower member 4. Rail members 128 and 129 could be, but need not be, in contact with tower member 4. Maintenance member 124 is configured and disposed to perform a maintenance task, such as cleaning, re-painting, and tower shell detecting. Of course it should also be understood that while only single maintenance member 124 is shown, operating system 58 could include a plurality of maintenance members arranged between adjacent ones of climbing modules 64-69. It should also be understood that maintenance member 124 is readily changeable to allow various tasked to be performed in a single maintenance operation, and that multiple maintenance members, each performing a separate maintenance task, can be employed.

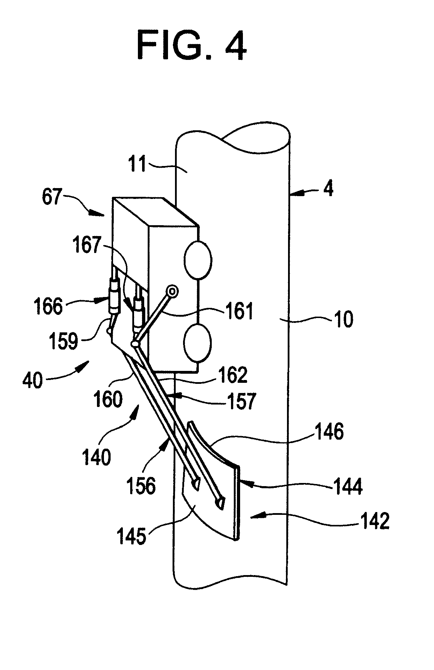

As best shown in FIG. 4, servicing system 40 further includes an attachment system 140 operatively associated with at least one of the climbing modules 64-69. In the exemplary embodiment shown, attachment system 140 is provided on climbing module 67 however the number and location of attachment system 140 can vary. Attachment system 140 includes a clamp member 142 having a body portion 144 including a first arcuate surface 145 and a second, opposing arcuate surface 146. Second arcuate surface 146 is provided with a friction material (not shown) that, when urged against outer surface 11 of tower member 4, supports climbing system 54. Towards that end, attachment system 140 includes a first linkage system 156 and a second linkage system 157.

First linkage system 156 includes a first link member 159 that is operatively connected to a second link member 160. First link member 159 is connected to climbing module 67 while second link member 160 is connected to the first arcuate surface 145 of clamp member 142. Similarly, second linkage system 157 includes a first link member 161 and a second link member 162. First link member 161 is coupled to climbing module 67 while second link member 162 is coupled to first arcuate surface 145 of clamp member 142. Attachment system 140 further includes a first actuator member 166 and a second actuator member 167. First actuator member 166 is operatively connected to first linkage system 156 while second actuator member 167 is operatively connected to second linkage system 157. Actuator members 166 and 167 operate on first and second linkage system 156, 157 to urge clamp member 142 against outer surface 11 of tower member 4.

In order to perform a maintenance operation, climbing system 54 is attached to outer surface 11 of tower member 4. Once attached, climbing modules 64-69 selectively traverse tower member 4 from first end portion 6 towards second end portion 8. Once at a selected location, attachment system 140 is energized to clamp climbing system 54 to tower member 4. Attachment system 140 allows for a substantially lightweight climbing system to traverse tower member 4 while higher weight (maintenance) components are lifted by cables once the climbing system is in place. At this point, lifting motors 104 and 105 are selectively activated in order to raise and position operating system 58. Once positioned, maintenance member 124 is activated and the maintenance operation is performed on tower member 4. As noted above, maintenance member 124 is selectively shiftable upon rail members 128 and 129 in order to facilitate the maintenance function. For example, maintenance member 124 can include a cleaning system that provides a scrubbing action to outer surface 11 of tower member 4, maintenance member 124 could be a painting system that aids in applying a coat of paint to the other surface of tower member 4 or the like. The exemplary embodiment enables tower maintenance functions to be performed from the ground thereby reducing the number of tower maintenance personnel required to perform a maintenance operation and further removes the need for maintenance personnel to scale the tower member in order to perform the maintenance operation.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A servicing system for a tower member having a first end portion that extends to a second end portion through an intermediate portion having an outer surface, the servicing system comprising:
   a climbing system operatively coupleable to the tower member, the climbing system including at least one climbing module that is selectively operated to shift the climbing system along the tower member from the first end portion toward the second end portion; and
   an operating system operatively coupled to the climbing system, the operating system including at last one lifting motor and a maintenance member, the at least one lifting motor selectively shifting the operating system relative to the climbing system.
2. The tower servicing system according to clause 1, wherein the at least one climbing module includes a body member having at least one driving wheel and at least one driving motor operatively coupled to the at least one driving wheel.
3. The tower servicing system according to any preceding clause, wherein the at least one driving wheel includes a plurality of driving wheels and the at least one driving motor includes a first driving motor and a second driving motor.
4. The tower servicing system according to any preceding clause, wherein the first driving motor is connected to select ones of the plurality of driving wheels and the second driving motor is connected to other select ones of the plurality of driving wheels.
5. The tower servicing system according to any preceding clause, wherein the at least one climbing module includes a plurality of climbing modules.
6. The tower servicing system according to any preceding clause, further comprising: a connector member linking each of the plurality of climbing modules, the connector member being configured and disposed to urge each of the plurality of climbing modules onto the outer surface of the tower member.
7. The tower servicing system according to any preceding clause, wherein the connector member is configured and disposed to circumscribe the tower member.
8. The tower servicing system according to any preceding clause, further comprising: a first lifting motor operatively connected between one of the plurality of climbing modules and the operating system and a second lifting motor operatively connected between another of the plurality of climbing modules and the operation system, the first and second lifting motors being selectively operated to shift the operating system toward the climbing system.
9. The tower servicing system according to any preceding clause, wherein the operating system includes at least one rail member extending about the outer surface of the tower member, the maintenance member being selectively shifted along the at least one rail member.
10. The tower servicing system according to any preceding clause, wherein the maintenance member is selectively shifted along the at least one rail member in a direction substantially perpendicular to a direction of travel of the climbing system.
11. The tower servicing system according to any preceding clause, wherein the at least one rail member circumscribes the tower member.
12. The tower servicing system according to any preceding clause, further comprising: an attachment system operatively coupled to the at least one climbing module, the attachment system being selectively activated to secure the climbing module to the outer surface of the tower member.
13. The tower servicing system according to any preceding clause, wherein the attachment system includes at least one clamp member and at least one actuator member, the actuator member being selectively activated to urge the clamp member into contact with the outer surface of the tower member.
14. A method of servicing a tower member having a main body including a first end portion, a second end portion and an intermediate portion having an outer surface, the method comprising:
   mounting a climbing system including at least one climbing module to the outer surface of the tower member;
   connecting an operating system including a maintenance member to the climbing system;
   selectively shifting the climbing system from the first end portion toward the second end portion of the tower member;
   selectively shifting the operating system toward the climbing system; and
   operating the maintenance member to perform a maintenance operation on the wind turbine system.
15. The method of any preceding clause, further comprising:
   stopping the climbing system along the tower member; and
   clamping the climbing module to the outer surface of the tower member.
16. The method of any preceding clause, further comprising: shifting the maintenance member along at least one rail that circumscribes the tower member.
17. The method of any preceding clause, wherein shifting the maintenance member includes moving the maintenance member in a direction substantially perpendicular to a direction of travel of the climbing system.
18. A tower servicing system comprising:
   a climbing system configured to be operatively coupled to a tower member, the climbing system including at least one climbing module that is selectively operated to shift the climbing system axially along the tower member; and
   an operating system operatively coupled to the climbing system, the operating system including at last one lifting motor and a maintenance member, the at least one lifting motor selectively shifting the operating system relative to the climbing system, allowing the maintenance member to selectively perform maintenance on the tower member.
19. The tower servicing system according to any preceding clause, wherein the at least one climbing module includes a plurality of climbing modules spaced about the outer surface.
20. The tower servicing system according to any preceding clause, wherein the operating system includes at least one rail member extending about an outer surface of the tower member, the maintenance member being selectively shifted along the at least one rail member.

## Claims

1. A servicing system (40) for a tower member (4) having a first end portion (6) that extends to a second end portion (8) through an intermediate portion (10) having an outer surface (11), the servicing system (40) comprising:
a climbing system (54) operatively coupleable to the tower member (4), the climbing system (54) including at least one climbing module (64-69) that is selectively operated to shift the climbing system (54) along the tower member (4) from the first end portion (6) toward the second end portion (8); and
an operating system (58) operatively coupled to the climbing system (54), the operating system (58) including at least one lifting motor (104) and a maintenance member (124), the at least one lifting motor (104) selectively shifting the operating system (58) relative to the climbing system (54).

2. The tower servicing system (40) according to claim 1, wherein the at least one climbing module (64-69) includes a body member (80) having at least one driving wheel (82) and at least one driving motor (87) operatively coupled to the at least one driving wheel (82).

3. The tower servicing system (40) according to any preceding claim, wherein the at least one driving wheel (82) includes a plurality of driving wheels (82-85) and the at least one driving motor (87) includes a first driving motor (87) and a second driving motor (88).

4. The tower servicing system (40) according to any preceding claim, wherein the first driving motor (87) is connected to select ones of the plurality of driving wheels (82, 83) and the second driving motor (88) is connected to other select ones of the plurality of driving wheels (84, 85).

5. The tower servicing system (40) according to any preceding claim, further comprising: a connector member (93) linking each of the plurality of climbing modules (64-69), the connector member (93) being configured and disposed to urge each of the plurality of climbing modules (64-69) onto the outer surface (11) of the tower member (4).

6. The tower servicing system (40) according to any preceding claim, further comprising: a first lifting motor (104) operatively connected between one of the plurality of climbing modules (64) and the operating system (58) and a second lifting motor (105) operatively connected between another of the plurality of climbing modules (68) and the operation system (58), the first and second lifting motors (104, 105) being selectively operated to shift the operating system (58) toward the climbing system (54).

7. The tower servicing system (40) according to any preceding claim, wherein the operating system (58) includes at least one rail member (128) extending about the outer surface (11) of the tower member (4), the maintenance member (124) being selectively shifted along the at least one rail member (128).

8. The tower servicing system (40) according to any preceding claim, wherein the maintenance member (124) is selectively shifted along the at least one rail member (128) in a direction substantially perpendicular to a direction of travel of the climbing system (54).

9. The tower servicing system (40) according to any preceding claim, further comprising: an attachment system (140) operatively coupled to the at least one climbing module (64), the attachment system (140) being selectively activated to secure the climbing module (64) to the outer surface (11) of the tower member (4).

10. The tower servicing system (10) according to any preceding claim, wherein the attachment system (140) includes at least one clamp member (142) and at least one actuator member (166), the actuator member (166) being selectively activated to urge the clamp member (142) into contact with the outer surface (11) of the tower member (4).
